# EUROPEAN PATENT APPLICATION

(11) **EP 4 722 036 A1**
(43) Date of publication of application: **08.04.2026**
(21) Application number: 23940526.9
(22) Date of filing: 28.12.2023
(51) Int. Cl.: B60N 2/28, B62B 9/10, A47D 13/02

(54) **BACKREST ANGLE ADJUSTING MECHANISM AND METHOD AND CHILD RESTRAINT DEVICE**

(30) Priority: 07.06.2023 CN 202310666060
(71) Applicant: Ningbo Baby First Baby Products Co., Ltd., Ningbo, Zhejiang 315412 (CN)
(72) Inventor: YANG, Gang, Ningbo, Zhejiang 315412 (CN); GUO, Yi, Ningbo, Zhejiang 315412 (CN)
(74) Representative: Lorenz Seidler Gossel Part. mbB
(86) International application number: PCT/CN2023/142710
(87) International publication number: WO 2024/250652

(57) **Abstract**

A backrest angle adjustment mechanism and method, and a child restraint device are provided. The backrest angle adjustment mechanism includes a first movable part (10), a second movable part (20), a base (30), and a driving mechanism (40). The first movable part (10) is arranged on a backrest (1). The second movable part (20) is arranged on a cushion (2). The first movable part (10) and the second movable part (20) are hingedly connected to form a hinge point (11). The first movable part (10) and the second movable part (20) are slidably connected to the base (30) on two sides of the hinge point (11) respectively. The first movable part (10) and the second movable part (20) are slidable in a front-rear direction relative to the base (30) when the first movable part (10) and the second movable part (20) rotate relative to each other. The driving mechanism (40) is configured to drive the first movable part (10) or the second movable part (20) to move relative to the base (30).

## Description

### TECHNICAL FIELD

The present invention relates to the technical field of child restraint devices, and specifically to a backrest angle adjustment mechanism and method, and a child restraint device.

### BACKGROUND

As stipulated in legal regulations, children are not allowed to use adult seat belts in vehicles, and special safety equipment, i.e., child restraint devices (also known as child restraint systems), must be provided for children in order to reduce injuries to children in the event of a vehicle collision or sudden deceleration.

A child restraint device generally includes a backrest and a cushion. To improve the comfort and safety of a child occupant, the recline angle of the backrest is generally adjustable to provide suitable backrest recline angles for children at different growth stages and for different application scenarios. For example, for newborns and young children whose bodies are not fully developed and whose spines and cervical vertebrae lack sufficient support to maintain a sitting posture, the backrest needs to be laid flat to allow such a child to lie down to prevent the head from slumping forward and the neck from tilting sideways. In addition, young children are likely to fall asleep during riding in a vehicle, and in such cases, the backrest also needs to be laid flat.

However, conventional child restraint devices such as child safety seats provide only a limited range of backrest angle adjustment. For commonly used split-type child safety seats in which the backrest is hingedly connected to the rear end of the cushion, the backrest angle adjustment mechanism is generally arranged at the position of the hinged connection. When the backrest is reclined, the center of gravity of such a child safety seat as a whole may be shifted towards the backrest and becomes unstable. In addition, the structure of the hinged connection is not stable and reliable enough, which limits the angle at which the backrest is allowed to be reclined, making it difficult to achieve a large recline angle. Consequently, parents often need to additionally use other child restraint devices that allow infants to lie down, such as infant carriers. For integral child safety seats in which the backrest and the cushion are integrally formed, the entire safety seat body including the backrest and the cushion is usually tilted forward or backward relative to the base to adjust the backrest angle. However, during this process, the inclination angle of the backrest relative to the cushion remains unchanged, and the child occupant has to maintain a curled-up position.

To sum up, conventional child restraint devices provide only a limited range of backrest angle adjustment, and it is necessary to design a novel backrest angle adjustment mechanism.

### SUMMARY

An objective of the present invention is to provide a backrest angle adjustment mechanism, which has a simple and reliable structure and allows for adjustment of a backrest to a large recline angle.

Another objective of the present invention is to provide a backrest angle adjustment method, which is easy to implement and allows for adjustment of a backrest to a large recline angle.

Yet another objective of the present invention is to provide a child restraint device, in which a backrest can be adjusted to a large recline angle, achieving a wider range of backrest angle adjustment.

To achieve one of the objectives of the present invention, the present invention adopts the following technical solutions. A backrest angle adjustment mechanism is provided, including a first movable part, a second movable part, a base, and a driving mechanism, where the first movable part is arranged on a backrest, the second movable part is arranged on a cushion, the first movable part and the second movable part are hingedly connected to form a hinge point, the first movable part and the second movable part are slidably connected to the base on two sides of the hinge point respectively, and the first movable part and the second movable part are slidable in a front-rear direction relative to the base when the first movable part and the second movable part rotate relative to each other, and the driving mechanism is configured to drive the first movable part and the second movable part to move relative to the base.

Preferably, a first end of the driving mechanism is connected to the base, and a second end of the driving mechanism is connected to the first movable part and is configured to drive the first movable part to slide relative to the base, or the second end of the driving mechanism is connected to the second movable part and is configured to drive the second movable part to slide relative to the base.

Further preferably, the first movable part is slidably connected to the base by an engagement of a first slide groove and a first slide block, the second movable part is slidably connected to the base by an engagement of a second slide groove and a second slide block, the driving mechanism is arranged between the second movable part and the base, the second slide groove on the second movable part is arranged parallel to a pushing direction of the driving mechanism, and the first slide groove on the first movable part is an arc-shaped groove.

Preferably, a first end of the driving mechanism is connected to the base, and a second end of the driving mechanism is configured to drive the hinge point to move away from or move toward the base, and the hinge point is connected to the driving mechanism, or an end of the first movable part adjacent to the hinge point is connected to the driving mechanism, or an end of the second movable part adjacent to the hinge point is connected to the driving mechanism.

Further preferably, guide structures are provided between the first movable part or the second movable part and the base and are configured to be engaged with each other, the guide structures are configured to guide a movement direction of the hinge point relative to the base, and the guide structures include a guide groove and a guide block configured to be inserted into the guide groove.

Preferably, the driving mechanism is an electric linear actuator, and the electric linear actuator includes a push rod motor.

To achieve one of the objectives of the present invention, the present invention adopts the following technical solution. A child restraint device is provided, including the backrest angle adjustment mechanism described above, where the child restraint device is a child safety seat, a child stroller, or an infant carrier.

To achieve one of the objectives of the present invention, the present invention adopts the following technical solution. A backrest angle adjustment method is provided, where a backrest is hingedly connected to a cushion to form a hinge point, and the backrest and the cushion are slidably connected to a base on two sides of the hinge point respectively, the backrest angle adjustment method including following steps: a driving mechanism being arranged on the base, the driving mechanism being connected to one of the backrest and the cushion, and driving, by the driving mechanism, the one of the backrest and the cushion to slide relative to the base to force the other of the backrest and the cushion to slide relative to the base through the hinge point and cause the backrest and the cushion to rotate toward or away from each other about the hinge point.

To achieve one of the objectives of the present invention, the present invention adopts the following technical solutions. A backrest angle adjustment method is provided, where a backrest is hingedly connected to a cushion to form a hinge point, and the backrest and the cushion are slidably connected to a base on two sides of the hinge point respectively, the backrest angle adjustment method including following steps: the hinge point or a side of the backrest or the cushion adjacent to the hinge point being connected to the base by a driving mechanism, and driving, by the driving mechanism, the hinge point to move away from or move toward the base to drive the backrest and the cushion to slide in a front-rear direction relative to the base and rotate toward or away from each other about the hinge point.

Further, the backrest angle adjustment method further includes the following steps: guide structures being provided between the backrest or the cushion and the base and being configured to be engaged with each other, and guiding, by the guide structures, a movement direction of the hinge point relative to the base.

Compared with the prior art, the present invention has the following advantages. (1) The first movable part on the backrest is hingedly connected to the second movable part on the cushion, and the first movable part and the second movable part are slidably connected to the base on the two sides of the hinge point respectively, i.e., the connection structure between the cushion, the backrest, and the base at least includes a rotational connection point between the cushion and the backrest, a slidable connection point between the cushion and the base, and a slidable connection point between the backrest and the base. In the present invention, the principle of angle adjustment of the backrest is as follows. The driving mechanism first drives the cushion and/or the backrest to move at one of the above connection points, causing the cushion and the backrest to move at the other two connection points. Therefore, during the angle adjustment of the backrest, the cushion and the backrest slide relative to the base, and the cushion and the backrest rotate in opposite directions about the hinge point to form an opening or closing action. As such, the backrest can be opened to a larger angle relative to the cushion, thereby achieving a large recline angle. Compared with conventional child safety seats, provided that the backrest moves relative to the base based on the same movement trajectory, the arrangement of the additional structure for causing the cushion to rotate in a direction opposite to the rotation direction of the backrest in the present invention allows for a more rapid increase in the recline angle of the backrest, and can achieve a large recline angle and a wider range of recline angle adjustment of the backrest. (2) The backrest and the cushion are not only hingedly connected to each other, but are also slidably connected to a front end and a rear end of the base respectively. Compared with the prior art where the backrest is mounted to the cushion by only a rotational connection structure, the arrangement of the additional connection points for the backrest in the present invention makes the connection structure of the backrest more stable and reliable. (3) The entire backrest angle adjustment mechanism has a simple structure, and is easy to assemble, and requires low costs for manufacture and use. (4) One child restraint device including the backrest angle adjustment mechanism can realize a wide range of recline angle adjustment of the backrest to meet different needs of children and allow a child to sit, curl up, or be in other postures. Parents do not have to purchase and use multiple child restraint devices for children at different growth stages or for specific application scenarios. The child restraint device provides a better user experience and greater versatility and can help reduce the childcare costs.

### BRIEF DESCRIPTION OF THE DRAWINGS

FIG. 1 is a schematic three-dimensional structural diagram of a child safety seat using a backrest angle adjustment mechanism.
FIG. 2 is a schematic structural exploded view of a child safety seat using a backrest angle adjustment mechanism.
FIG. 3 is a schematic structural cross-sectional view of the child safety seat shown in FIG. 2 when the backrest is at a maximum recline angle.
FIG. 4 is a schematic structural cross-sectional view of the child safety seat shown in FIG. 2 when the backrest is at a minimum recline angle.
FIG. 5 is a schematic structural cross-sectional view of the child safety seat shown in FIG. 2 when the backrest is at a large recline angle.
FIG. 6 is a schematic structural exploded view of a child safety seat using another backrest angle adjustment mechanism.
FIG. 7 is a schematic structural cross-sectional view of the child safety seat shown in FIG. 6 when the backrest is at a small recline angle.
FIG. 8 is a schematic structural cross-sectional view of the child safety seat shown in FIG. 6 when the backrest is at a large recline angle.
FIG. 9 is a schematic structural side view of the child safety seat shown in FIG. 6 when the backrest is at a small recline angle.
FIG. 10 is a schematic structural side view of the child safety seat shown in FIG. 6 when the backrest is at a large recline angle.

In the drawings: 1. backrest; 10. first movable part; 11. hinge point; 2. cushion; 20. second movable part; 21. hinge pin; 30. base; 31. rotary disc; 311. connection member; 32. base body; 321. rotating shaft; 40. driving mechanism; 51. first slide block; 52. second slide block; 61. first slide groove; 62. second slide groove; 70. guide structure; 71. guide block; 72. guide groove.

### DETAILED DESCRIPTION OF THE EMBODIMENTS

The present invention will be further described below through specific embodiments. It should be noted that the embodiments or technical features described below may be arbitrarily combined to form new embodiments without conflict.

In the description of the present invention, it should be noted that orientation and position relationships indicated by the orientation terms such as "center", "transverse", "longitudinal", "length", "width", "thickness", "on", "below", "front", "rear", "left", "right", "vertical", "horizontal", "top", "bottom", "inner", "outer", "clockwise", and "counterclockwise" are based on the orientation or positional relationships shown in the drawings, and are only for the convenience of describing the present invention and simplifying the description, rather than indicating or implying that the apparatus or element described must have a specific orientation or be constructed and operated in a specific orientation, and therefore are not to be construed as limiting the present invention.

It should be noted that in the specification and claims of the present invention, the terms such as "first" and "second" are intended to distinguish between similar objects but do not indicate a particular order or sequence.

In the specification and claims of the present invention, the terms "comprise," "include," and any other variants thereof are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device.

Conventional child restraint devices such as child safety seats provide only a limited range of backrest angle adjustment. Conventional child safety seats are divided into two types: split-type child safety seats in which the cushion is separated from the backrest and integral child safety seats in which the backrest and the cushion are integrally formed. For the split-type child safety seats, the range of backrest angle adjustment is affected by the factors such as the center of gravity of the child safety seat and the strength of the structure of the hinged connection between the backrest and the cushion, and the backrest cannot be reclined to a large angle. For the integral child safety seats, the backrest cannot rotate relative to the cushion, and after the backrest is reclined, the cushion will be lifted up. As a result, a child occupant has to maintain a curled-up position, and a large recline angle cannot be achieved.

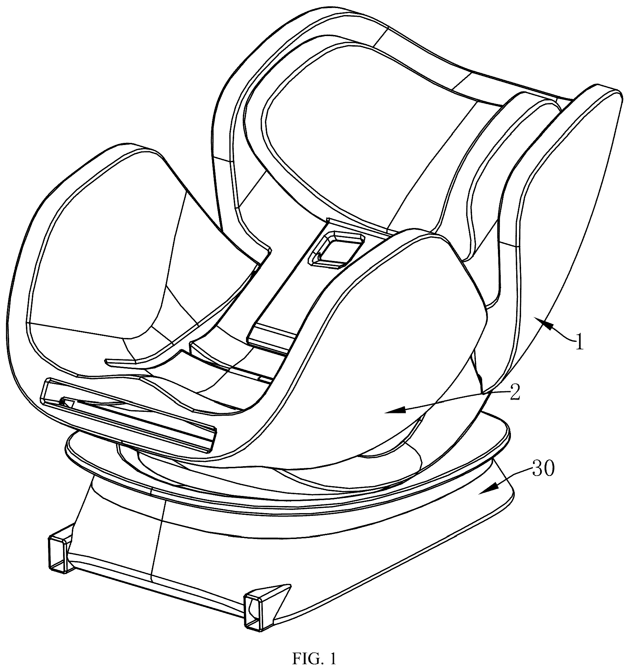

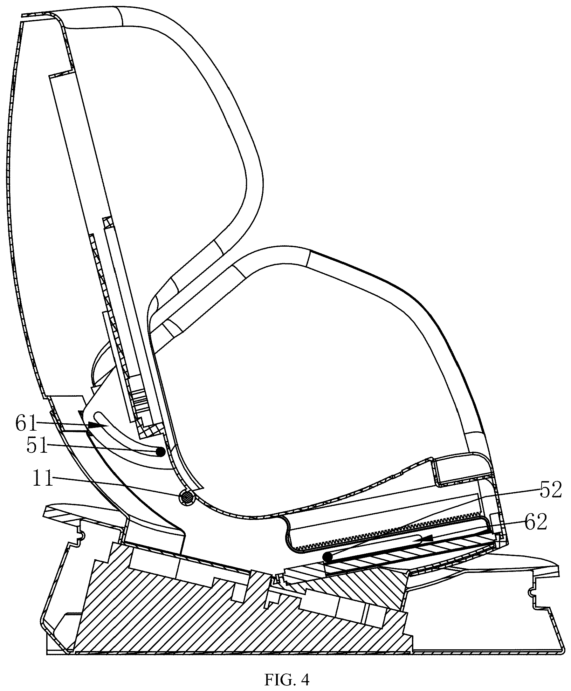

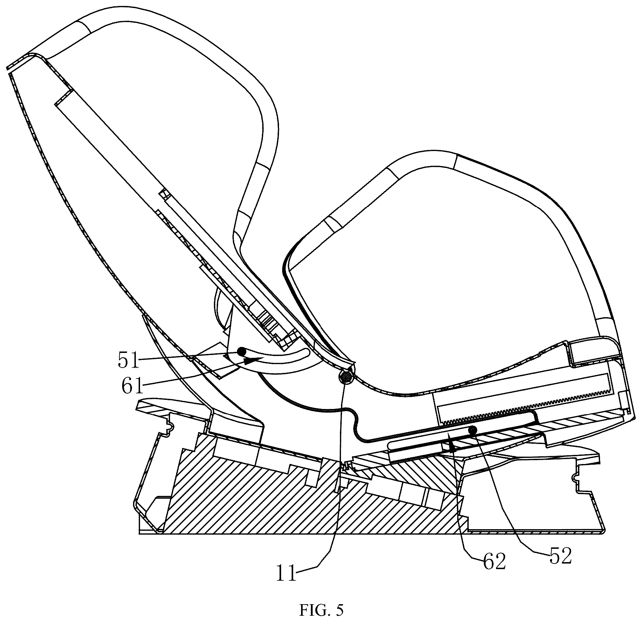

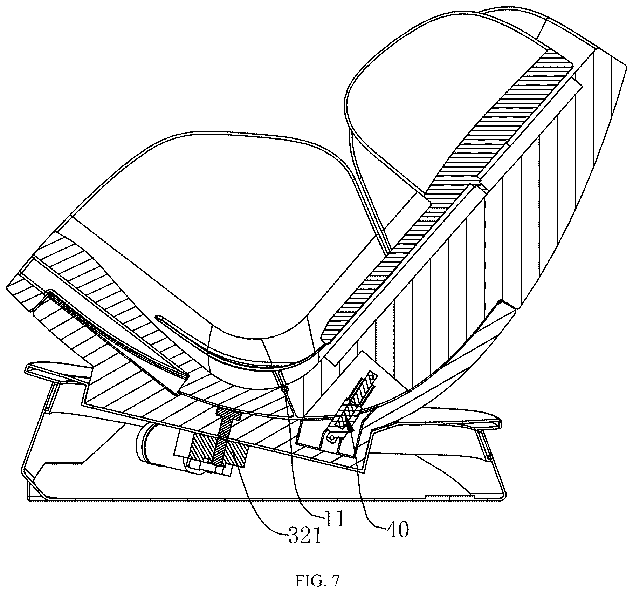

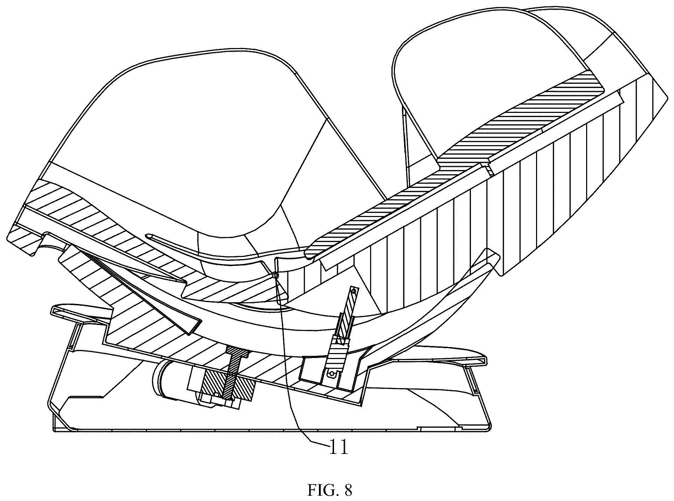

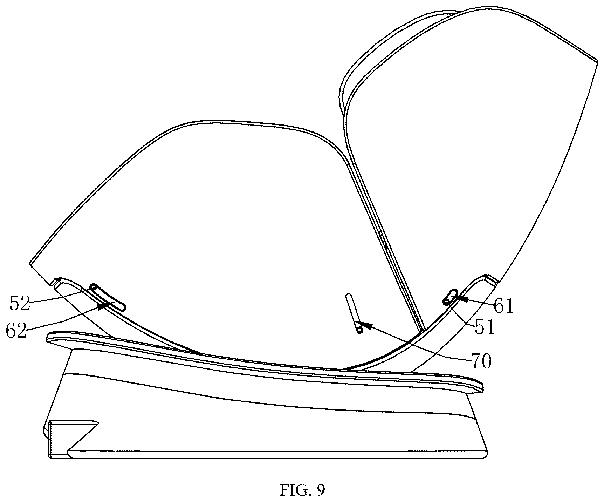

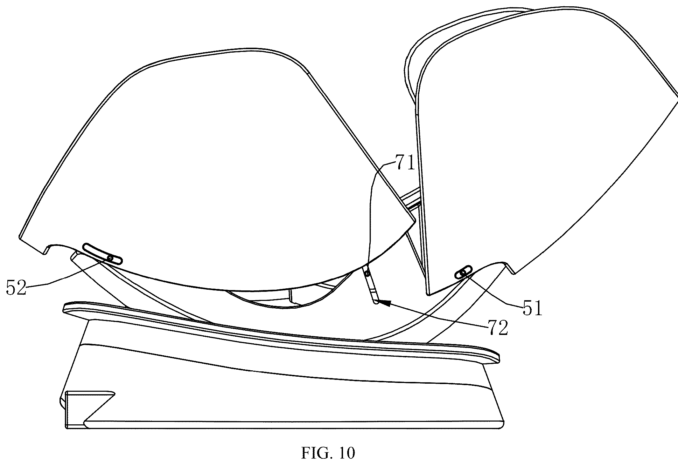

Therefore, the present invention provides a backrest angle adjustment mechanism. As shown in FIG. 1 to FIG. 10, the backrest angle adjustment mechanism includes a first movable part 10, a second movable part 20, a base 30, and a driving mechanism 40. The first movable part 10 is arranged on a backrest 1. The second movable part 20 is arranged on a cushion 2. The first movable part 10 and the second movable part 20 are hingedly connected to form a hinge point 11. The first movable part 10 and the second movable part 20 are slidably connected to the base 30 on two sides of the hinge point 11 respectively. The first movable part 10 and the second movable part 20 are slidable in a front-rear direction relative to the base 30 when the first movable part 10 and the second movable part 20 rotate relative to each other. The driving mechanism 40 is configured to drive the first movable part 10 and the second movable part 20 to move relative to the base 30. The first movable part 10 on the backrest 1 is hingedly connected to the second movable part 20 on the cushion 2, and the first movable part 10 and the second movable part 20 are slidably connected to the base 30 on the two sides of the hinge point 11 respectively, i.e., the connection structure between the cushion 2, the backrest 1, and the base 30 at least includes a rotational connection point between the cushion 2 and the backrest 1, a slidable connection point between the cushion 2 and the base 30, and a slidable connection point between the backrest 1 and the base 30.

In the present invention, the principle of angle adjustment of the backrest 1 is as follows. The driving mechanism 40 first drives the cushion 2 and/or the backrest 1 to move at one of the above connection points, causing the cushion 2 and the backrest 1 to move at the other two connection points. Therefore, during the angle adjustment of the backrest 1, the cushion 2 and the backrest 1 slide relative to the base 30, and the cushion 2 and the backrest 1 rotate in opposite directions about the hinge point 11 to form an opening or closing action. As such, the backrest 1 can be opened to a larger angle relative to the cushion 2, thereby achieving a large recline angle. Compared with conventional child safety seats, provided that the backrest 1 moves relative to the base 30 based on the same movement trajectory, the arrangement of the additional structure for causing the cushion 2 to rotate in a direction opposite to the rotation direction of the backrest 1 in the present invention allows for a more rapid increase in the recline angle of the backrest 1, and can achieve a large recline angle and a wider range of recline angle adjustment of the backrest 1. The backrest 1 and the cushion 2 are not only hingedly connected to each other, but are also slidably connected to a front side and a rear side of the base 30 respectively. Compared with the prior art where the backrest 1 is mounted to the cushion 2 by only a rotational connection structure, the arrangement of the additional connection points for the backrest 1 in the present invention makes the connection structure of the backrest 1 more stable and reliable. In addition, the entire backrest angle adjustment mechanism has a simple structure, and is easy to assemble, and requires low costs for manufacture and use. Moreover, one child restraint device including the backrest angle adjustment mechanism can realize a wide range of recline angle adjustment of the backrest 1 to meet different needs of children and allow a child to sit, curl up, or be in other postures. Parents do not have to purchase and use multiple child restraint devices for children at different growth stages or for specific application scenarios. The child restraint device provides a better user experience and greater versatility and can help reduce the childcare costs.

The first movable part 10 may be a part or an entirety of the backrest 1, or may be a component mounted to the backrest 1. Similarly, the second movable part 20 may be a part or an entirety of the cushion 2, or may be a component mounted to the cushion 2.

The driving mechanism 40 is configured to drive the first movable part 10 and the second movable part 20 to move relative to the base 30 in either of the following two manners. In a first manner, the driving mechanism 40 directly drives the hinge point 11 to move toward or away from the base 30 to force the slidable connection structures on the front side and the rear side of the hinge point 11 to slide. In a second manner, the driving mechanism 40 first drives one of the first movable part 10 and the second movable part 20 to slide relative to the base 30 to force the other of the first movable part 10 and the second movable part 20 to slide through the hinge point 11. Both the two manners are for the purpose of causing the second movable part 20 to slide relative to the base 30 and rotate in a direction opposite to the rotation direction of the first movable part 10 about the hinge point 11 during the angle adjustment of the backrest 1, thereby achieving a large recline angle.

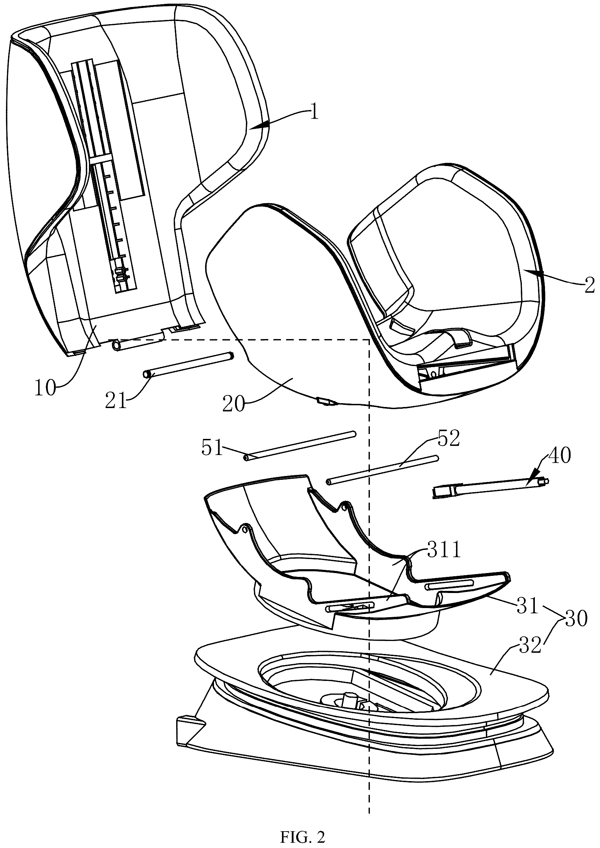

In some embodiments, as shown in FIG. 2 to FIG. 5, a first end of the driving mechanism 40 is connected to the base 30, and a second end of the driving mechanism 40 is connected to the first movable part 10 and is configured to drive the first movable part 10 to slide relative to the base 30, or the second end of the driving mechanism 40 is connected to the second movable part 20 and is configured to drive the second movable part 20 to slide relative to the base 30.

The scheme of first driving one of the first movable part 10 and the second movable part 20 to slide relative to the base 30 to force the other of the first movable part 10 and the second movable part 20 to slide through the hinge point 11 further includes two cases. In a first case, the first movable part 10 is connected to the driving mechanism 40, and when the first movable part 10 is driven to slide relative to the base 30, the first movable part 10 forces the second movable part 20 to slide relative to the base 30 because the first movable part 10 is hingedly connected to the second movable part 20. In this process, the first movable part 10 and the second movable part 20 rotate in opposite directions about the hinge point 11, i.e., the first movable part 10 and the second movable part 20 can simultaneously slide relative to the base 30 and rotate toward or away from each other. In a second case, the second movable part 20 is connected to the driving mechanism 40, and when the second movable part 20 is driven to slide relative to the base 30, the second movable part 20 forces the first movable part 10 to slide relative to the base 30 because the first movable part 10 is hingedly connected to the second movable part 20. In this process, the first movable part 10 and the second movable part 20 also rotate toward or away from each other, i.e., the backrest 1 and the cushion 2 rotate toward or away from each other.

Further preferably, the first movable part 10 is slidably connected to the base 30 by an engagement of a first slide groove and a first slide block, the second movable part 20 is slidably connected to the base 30 by an engagement of a second slide groove and a second slide block, and the first slide groove and the second slide groove can respectively guide the sliding directions of the first movable part 10 and the second movable part 20. The connection achieved through the engagement of the slide groove and the corresponding slide block involves a simple structure, and is easy to implement, and requires low costs for use.

Preferably, the driving mechanism 40 is arranged between the second movable part 20 and the base 30, and the second slide groove on the second movable part 20 is arranged parallel to a pushing direction of the driving mechanism 40, so that the second slide block can smoothly and naturally slide along the second slide groove under the driving of the driving mechanism 40, and the first slide groove on the first movable part 10 is an arc-shaped groove to guide the first movable part 10 to rotate about the hinge point 11.

In some embodiments, the hinged connection between the backrest 1 and the cushion 2 is achieved by a hinge pin 21, which has a simple structure and is easy to assemble and use.

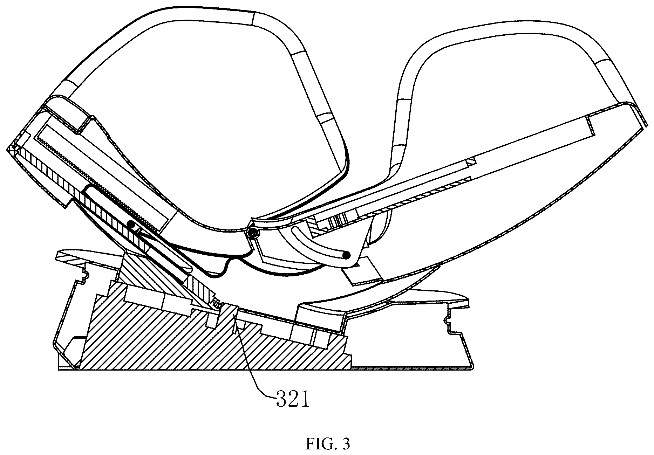

In some embodiments, the child restraint device including the backrest angle adjustment mechanism is a child safety seat, the base 30 includes a base body 32 and a rotary disc 31, the base body 32 is configured to be mounted on a seat of a vehicle, the rotary disc 31 is rotatably connected to the base body 32, and the backrest 1 and the cushion 2 are slidably connected to the rotary disc 31. The child safety seat can be mounted in a front-facing or rear-facing manner. For infants and young children, the child safety seat may be mounted in a rear-facing manner by rotating the rotary disc 31, and the backrest 1 may be adjusted to a large recline angle as shown in FIG. 3, allowing the child to lie in the child safety seat with its back in contact with the backrest 1, which can distribute the force of the child safety seat on the head and cervical spine of the child in an unexpected situation, thereby protecting the child.

Further, the rotary disc 31 is provided with connection members 311 extending upward. The connection members 311 extend upward to be connected to the backrest 1 and the cushion 2. The connection members 311 are arranged on a left side and a right side of the rotary disc 31. A left side and a right side of the backrest 1 and a left side and a right side of the cushion 2 are slidably connected to the connection members 311 respectively, i.e., the left side and the right side of the backrest 1 are slidably connected to the left side and the right side of the rotary disc 31, and the left side and the right side of the cushion 2 are slidably connected to the left side and the right side of the rotary disc 31. As such, the strength of connection between the backrest 1 and the rotary disc 31 and the strength of connection between the cushion 2 and the rotary disc 31 are improved, and the rotary disc 31 and the cushion 2 are kept horizontal in a left-right direction. In addition, a space between the two connection members 311 on the left side and the right side can accommodate a middle portion of the backrest 1 and a middle portion of the cushion 2, so that the child safety seat has a compact structure.

Further, the connection members 311 on the two sides are plate-shaped and have a certain curvature to conform to the contours of the backrest 1 and the base body 32.

Further preferably, the base body 32 is provided with an inclined rotating shaft 321, and the rotary disc 31 is rotatably connected to the rotating shaft 321, so that different recline angles of the backrest 1 can be formed when the child safety seat is mounted in a front-facing or rear-facing manner. In this embodiment, the base body 32 is low in front and high in rear, a rotating shaft 321 extending forward inclinedly is provided in a middle portion of the base body 32, and the rotary disc 31 is configured to rotate about the rotating shaft 321, so that when the child safety seat is mounted in a rear-facing manner, a larger recline angle of the backrest 1 can be achieved compared with the recline angle of the backrest 1 which can be achieved when the child safety seat is mounted in a front-facing manner, allowing the child to lie more flatly and more comfortably when the child safety seat is mounted in a rear-facing manner.

In an embodiment, the driving mechanism 40 is an electric linear actuator, which is electrically controlled, labor-saving, and convenient. Further, the electric linear actuator is a push rod motor capable of pushing the backrest 1 or the cushion 2 to slide in a straight line relative to the base 30.

In this embodiment, the driving mechanism 40 is arranged between the second movable part 20 and the base 30, and the second slide groove on the second movable part 20 is arranged parallel to the pushing direction of the driving mechanism 40, namely, the second slide groove 62 on the cushion 2 is a linear groove to guide the cushion 2 to slide in the front-rear direction relative to the base 30.

It can be understood that assuming that the driving mechanism 40 is arranged between the backrest 1 and the base 30 to push the backrest 1 to slide relative to the base 30, the design of the related mounting structure of the driving mechanism 40 not only needs to consider the sliding of the backrest 1 relative to the base 30, but also needs to consider the significant rotation of the backrest 1 relative to the base 30, so as to eliminate the interference of the rotation of the backrest 1 on the driving mechanism 40. In this embodiment, the driving mechanism 40 is arranged between the cushion 2 and the base 30, and the driving mechanism 40 is configured to drive the cushion 2 to slide in a straight line, i.e., the cushion 2 is slidable but not rotatable relative to the base 30. This facilitates the design of the connection structure between the cushion 2 and the base 30 and the mounting structures between the two ends of the driving mechanism 40 and the base 30 and the cushion 2. It should be noted that the fact that the cushion 2 is slidable but not rotatable relative to the base 30 does not conflict with the rotation of the cushion 2 and the backrest 1 in opposite directions about the hinge point 11, and the rotation of the backrest 1 and the cushion 2 in opposite directions is defined using the hinge point 11 as a reference.

Preferably, the push rod motor is arranged at a middle position in the left-right direction, to better push the left side and the right side of the cushion 2 to synchronously slide respectively along the left side and the right side of the base 30. Such a design involves a simple structure, and is easy to implement, and requires low costs for use.

In some other embodiments, the driving mechanism 40 may also be configured as a mechanical transmission mechanism such as a screw rod, a belt, a pneumatic cylinder, or a hydraulic cylinder.

In some embodiments, the slidable connection between the first movable part 10 and the base 30 and the slidable connection between the second movable part 20 and the base 30 may be implemented as follows. The slide blocks include a first slide block 51 corresponding to the backrest 1 and a second slide block 52 corresponding to the cushion 2, the first slide block 51 and the second slide block 52 are both elongated connecting rods, one of the backrest 1 and the base 30 is provided with a first mounting hole and the other of the backrest 1 and the base 30 is provided with a first slide groove 61, the first slide block 51 is inserted into the first mounting hole and the first slide groove 61, one of the cushion 2 and the base 30 is provided with a second mounting hole and the other of the cushion 2 and the base 30 is provided with a second slide groove 62, and the second slide block 52 is inserted into the second mounting hole and the second slide groove 62. The slidable connection is realized by respectively inserting the elongated connecting rods into the corresponding mounting holes and the corresponding slide grooves in sequence. Such a design involves a simple structure, and is easy to implement, and may ensure the synchronous sliding of the left side and the right side of the backrest 1 or the cushion 2.

In some other embodiments, the slide block may be integrally formed on the backrest 1, the cushion 2, or the base 30, or may be a protrusion mounted to the backrest 1, the cushion 2, or the base 30, and the protrusion is configured to be inserted into the corresponding slide groove and slide along the corresponding slide groove.

Based on the above backrest angle adjustment mechanism, the present invention further provides a method for angle adjustment of a backrest 1. The backrest 1 is hingedly connected to a cushion 2 to form a hinge point 11. The backrest 1 and the cushion 2 are slidably connected to the base 30 on two sides of the hinge point 11 respectively. The method for angle adjustment of the backrest 1 includes the following steps. The driving mechanism 40 is arranged on the base 30. The driving mechanism 40 is connected to one of the backrest 1 and the cushion 2. The one of the backrest 1 and the cushion 2 is driven by the driving mechanism 40 to slide relative to the base 30 to force the other of the backrest 1 and the cushion 2 to slide relative to the base 30 through the hinge point 11 and cause the backrest 1 and the cushion 2 to rotate toward or away from each other about the hinge point 11. In the adjustment method, the backrest 1 and the cushion 2 can also slide relative to the base 30 while rotating toward or away from each other, so that a large recline angle and a wider range of angle adjustment of the backrest 1 can be achieved. In addition, the adjustment method involves a simple structure and is easy to operate.

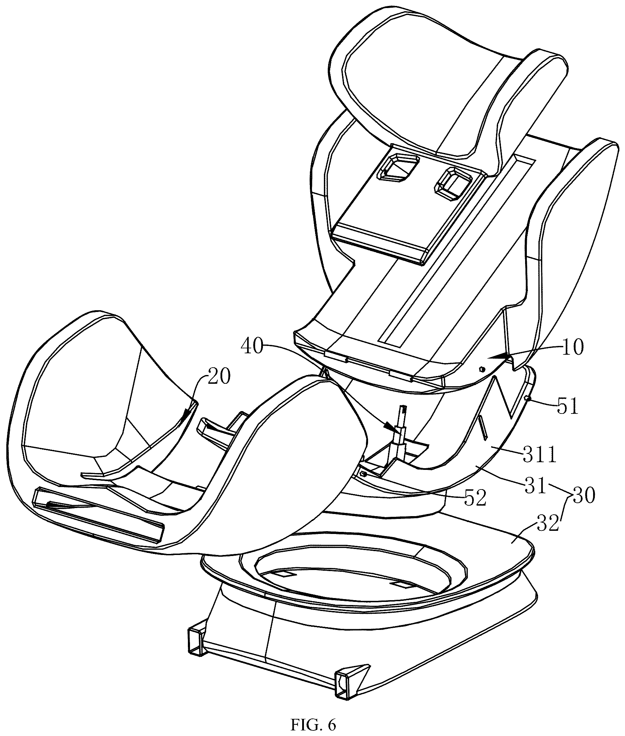

In some embodiments, as shown in FIG. 6 to FIG. 10, a first end of the driving mechanism 40 is connected to the base 30, and a second end of the driving mechanism 40 is configured to drive the hinge point 11 to move away from or move toward the base 30, which corresponds to the above scheme of directly driving the hinge point 11 to move toward or move away from the base 30 to force the slidable connection structures on the front side and the rear side of the hinge point 11 to slide.

This specifically includes three cases as follows. The hinge point 11 is connected to the driving mechanism 40, or an end of the first movable part 10 adjacent to the hinge point 11 is connected to the driving mechanism 40, or an end of the second movable part 20 adjacent to the hinge point 11 is connected to the driving mechanism 40.

In this embodiment, the first movable part 10, i.e., the end of the backrest 1 adjacent to the hinge point 11, is connected to the driving mechanism 40.

Preferably, guide structures 70 are provided between the first movable part 10 or the second movable part 20 and the base 30 and are configured to be engaged with each other, and the guide structures 70 are configured to guide a movement direction of the hinge point 11 relative to the base 30.

Specifically, the guide structures 70 include a guide groove 72 and a guide block 71 configured to be inserted into the guide groove 72. Two guide blocks 71 are respectively provided on a left side and a right side of the end of the backrest 1 adjacent to the hinge point 11. Two guide grooves 72 corresponding to the guide blocks 71 are respectively provided on the connection members 311 on a left side and a right side of a middle portion of the base 30. The guide blocks 71 are respectively inserted into the corresponding guide grooves 72. The guide grooves 72 are linear grooves, which are easy to process.

The guide grooves 72 or the guide blocks 71 may be integrally formed on the backrest 1 or the base 30, or may be structures mounted to the backrest 1 or the base 30. The guide structures 70 have a simple structure and require low costs for manufacture and use.

In some embodiments, referring to FIG. 6, the driving mechanism 40 is arranged at a middle position in a left-right direction, and the guide structures 70 are arranged on a left side and a right side of the driving mechanism 40 to better guide the movement direction of the hinge point 11 relative to the base 30. Such a design has a compact and reasonable layout.

In some embodiments, the driving mechanism 40 is an electric linear actuator, which is electrically controlled, labor-saving, and convenient. Further, the electric linear actuator is a push rod motor.

It can be understood that considering that the backrest 1 can significantly rotate relative to the base 30, in this embodiment, an end portion of the driving mechanism 40 is rotatably connected to the end of the backrest 1 adjacent to the hinge point 11.

In some embodiments, the backrest angle adjustment mechanism is also applicable to a child safety seat.

In this embodiment, the slidable connection between the backrest 1 and the base 30 and the slidable connection between the cushion 2 and the base 30 are implemented as follows. Two first slide blocks 51 are respectively arranged on a left side and a right side of a rear end of the base 30, two first slide grooves 61 are respectively provided on a left side and a right side of the backrest 1, and the two first slide blocks 51 are respectively inserted into the two first slide grooves 61 to realize the slidable connection between the backrest 1 and the base 30. Two second slide blocks 52 are respectively arranged on a left side and a right side of a front end of the base 30, two second slide grooves 62 are respectively provided on a left side and a right side of the cushion 2, and the two second slide blocks 52 are respectively inserted into the two second slide grooves 62 to realize the slidable connection between the cushion 2 and the base 30.

Based on the backrest angle adjustment mechanism shown in FIG. 6 to FIG. 10, the present invention further provides an easy-to-operate method for angle adjustment of a backrest 1. The backrest 1 is hingedly connected to a cushion 2 to form a hinge point 11. The backrest 1 and the cushion 2 are slidably connected to the base 30 on two sides of the hinge point 11 respectively. The method for angle adjustment of the backrest 1 includes the following steps. The hinge point 11 or the side of the backrest 1 or the cushion 2 adjacent to the hinge point 11 is connected to the base 30 by the driving mechanism 40. The hinge point 11 is driven by the driving mechanism 40 to move away from or move toward the base 30 to drive the backrest 1 and the cushion 2 to slide in a front-rear direction relative to the base 30 and rotate toward or away from each other about the hinge point 11. In the adjustment method, the backrest 1 and the cushion 2 can also slide relative to the base 30 while rotating toward or away from each other, so that a large recline angle and a wider range of angle adjustment of the backrest 1 can be achieved. In addition, the adjustment method involves a simple structure and is easy to operate.

Further, the method for angle adjustment of the backrest 1 further includes the following steps. Guide structures 70 are provided between the backrest 1 or the cushion 2 and the base 30 and are configured to be engaged with each other, and a movement direction of the hinge point 11 relative to the base 30 is guided by the guide structures 70.

In some embodiments, the present invention provides a child restraint device including the backrest angle adjustment mechanism of any one of the above embodiments, in which the backrest 1 can be adjusted to a large recline angle, achieving a wider range of angle adjustment of the backrest 1.

Specifically, the child restraint device is a child safety seat, a child stroller, or an infant carrier.

The basic principles, main features and advantages of the present invention have been described above. Those skilled in the art should understand that the present invention is not limited to the above embodiments. The descriptions of the embodiments and the specification are only for illustrating the principles of the present invention. Various changes and improvements may be made to the present invention without departing from the spirit and scope of the present invention, and such changes and improvements all fall within the scope of protection claimed by the present invention. The scope of protection claimed by the present invention is defined by the appended claims and their equivalents.

## Claims

1. A backrest angle adjustment mechanism, **characterized by** comprising a first movable part, a second movable part, a base, and a driving mechanism, wherein the first movable part is arranged on a backrest, the second movable part is arranged on a cushion, the first movable part and the second movable part are hingedly connected to form a hinge point, the first movable part and the second movable part are slidably connected to the base on two sides of the hinge point respectively, the first movable part and the second movable part are slidable in a front-rear direction relative to the base when the first movable part and the second movable part rotate relative to each other, and the driving mechanism is configured to drive the first movable part and the second movable part to move relative to the base.

2. The backrest angle adjustment mechanism according to claim 1, **characterized in that** a first end of the driving mechanism is connected to the base, and a second end of the driving mechanism is connected to the first movable part and is configured to drive the first movable part to slide relative to the base, or the second end of the driving mechanism is connected to the second movable part and is configured to drive the second movable part to slide relative to the base.

3. The backrest angle adjustment mechanism according to claim 2, **characterized in that** the first movable part is slidably connected to the base by an engagement of a first slide groove and a first slide block, the second movable part is slidably connected to the base by an engagement of a second slide groove and a second slide block, the driving mechanism is arranged between the second movable part and the base, the second slide groove on the second movable part is arranged parallel to a pushing direction of the driving mechanism, and the first slide groove on the first movable part is an arc-shaped groove.

4. The backrest angle adjustment mechanism according to claim 1, **characterized in that** a first end of the driving mechanism is connected to the base, and a second end of the driving mechanism is configured to drive the hinge point to move away from or move toward the base, and the hinge point is connected to the driving mechanism, or an end of the first movable part adjacent to the hinge point is connected to the driving mechanism, or an end of the second movable part adjacent to the hinge point is connected to the driving mechanism.

5. The backrest angle adjustment mechanism according to claim 4, **characterized in that** guide structures are provided between the first movable part or the second movable part and the base and are configured to be engaged with each other, the guide structures are configured to guide a movement direction of the hinge point relative to the base, and the guide structures comprise a guide groove and a guide block configured to be inserted into the guide groove.

6. The backrest angle adjustment mechanism according to any one of claims 1 to 5, **characterized in that** the driving mechanism is an electric linear actuator, and the electric linear actuator comprises a push rod motor.

7. A child restraint device, **characterized by** comprising the backrest angle adjustment mechanism according to any one of claims 1 to 6, wherein the child restraint device is a child safety seat, a child stroller, or an infant carrier.

8. A backrest angle adjustment method, **characterized in that** a backrest is hingedly connected to a cushion to form a hinge point, and the backrest and the cushion are slidably connected to a base on two sides of the hinge point respectively, the backrest angle adjustment method comprising following steps: a driving mechanism being arranged on the base, the driving mechanism being connected to one of the backrest and the cushion, and driving, by the driving mechanism, the one of the backrest and the cushion to slide relative to the base to force the other of the backrest and the cushion to slide relative to the base through the hinge point and cause the backrest and the cushion to rotate toward or away from each other about the hinge point.

9. A backrest angle adjustment method, **characterized in that** a backrest is hingedly connected to a cushion to form a hinge point, and the backrest and the cushion are slidably connected to a base on two sides of the hinge point respectively, the backrest angle adjustment method comprising following steps: the hinge point or a side of the backrest or the cushion adjacent to the hinge point being connected to the base by a driving mechanism, and driving, by the driving mechanism, the hinge point to move away from or move toward the base to drive the backrest and the cushion to slide in a front-rear direction relative to the base and rotate toward or away from each other about the hinge point.

10. The backrest angle adjustment method according to claim 9, **characterized by** further comprising following steps: guide structures being provided between the backrest or the cushion and the base and being configured to be engaged with each other, and guiding, by the guide structures, a movement direction of the hinge point relative to the base.
